# EUROPEAN PATENT SPECIFICATION

(11) **EP 2 352 007 B1**
(45) Date of publication and mention of the grant of the patent: **07.05.2014**
(21) Application number: 09823481.8
(22) Date of filing: 16.10.2009
(51) Int. Cl.: G01N 3/32

(54) **METHOD FOR EVALUATING CORROSION FATIGUE DAMAGE**
VERFAHREN ZUR BEWERTUNG VON SCHÄDEN DURCH KORROSIONSERMÜDUNG
PROCÉDÉ D'ÉVALUATION D'UN DOMMAGE DE FATIGUE PAR CORROSION

(30) Priority: 30.10.2008 JP 2008280037
(43) Date of publication of application: 03.08.2011
(73) Proprietor: Hitachi Metals, Ltd., Tokyo 105-8614 (JP)
(72) Inventor: KATAOKA Kouta, Yasugi-shi Shimane 692-8601 (JP)
(74) Representative: Strehl Schübel-Hopf & Partner
(86) International application number: PCT/JP2009/067893
(87) International publication number: WO 2010/050368

(56) References cited:
- JP-A- 48 075 086
- JP-A- 62 014 035
- JP-A- 2007 298 467
- JP-A- 2007 298 467
- JP-U- 63 088 739
- DATABASE WPI Week 199109 Thomson Scientific, London, GB; AN 1991-064553 XP002671273, & SU 1 576 857 A (KIEV POLY) 7 July 1990 (1990-07-07)
- BHUIYAN MD S ET AL: "Corrosion fatigue behavior of extruded magnesium alloy AZ61 under three different corrosive environments", INTERNATIONAL JOURNAL OF FATIGUE, BUTTERWORTH SCIENTIFIC LTD, GUILDFORD, GB, vol. 30, no. 10-11, 1 October 2008 (2008-10-01), pages 1756-1765, XP022710298, ISSN: 0142-1123, DOI: 10.1016/J.IJFATIGUE.2008.02.012 [retrieved on 2008-03-07]

## Description

### Technical Field

The present invention relates to a method for easily reproducing and evaluating, with using a test piece, a corrosion fatigue damage generating in a component which is used under repeated load application in a corrosive environment. More particularly, the present invention relates to a method suitably for evaluating a corrosion fatigue damage generating in an internal cooling hole of a die.

### Background Art

A conventional method for evaluating a property resistant to stress corrosion cracking for general steel materials or the like include a stress corrosion crack test method with a constant load wherein a test piece is immersed in a corrosive tank and applied with a constant tensile load thereto and the property is comparatively evaluated by a time to fracture (see Non Patent Literature 1), and a standard test method for stress corrosion cracking wherein pre-crack is introduced in a test piece and a load is applied to the test piece by a bolt or wedge so as to open a crack surface (wedge opening loading; WOL) and the property is comparatively evaluated by obtaining the development rate of the crack or the lower limit of a stress intensity factor (a threshold stress intensity factor) below which the crack does not develop(see Non Patent Literature 2). These test methods are mainly directed to general steel materials used for marine structures or structures requiring higher corrosion resistance. The tests are performed under a constant load.

The present invention assumes, as a damage to be evaluated, a corrosion fatigue damage caused in a component or the like used under repeated loads in a corrosive environment (The component is referred to as "fatigue member" below). In a field of a die for die-casting or the like, the damage is generated at a crack portion in an internal cooling hole of the die where a stress, such as a heat stress, a die clamping force or a casting pressure, is repeatedly applied in every cycle the die is used in a state where the portion is exposed to a cooling medium such as industrial water. That is, the damage is in a form which is caused in a state of so-called corrosion fatigue. Thus, the test methods according to the above Non Patent Literatures can not reproduce an accurate state since the damage to be evaluated in the present invention is "fatigue" substantially resulting from a repetitive stress.

As a method for evaluating a damage in a water-cooling hole portion of a die, there has been proposed a test method for more accurately reproducing the actual state of the die in use by repeatedly heating and cooling, from outside, a test piece having an internal cooling hole through which water flows (see Patent Literature 1). The method is excellent in that fatigue can be reproduced in the internal cooling hole by repeatedly generating a heat stress.

SU 1 576 857 A discloses a method for evaluating a corrosion fatigue damage by observing an outer surface of a test piece surrounded by a liquid corrosion medium.

In the article "Corrosion fatigue behavior of extruded magnesium alloy AZ61 under three different corrosive environments", International Journal of Fatigue, vol. 30, no. 10-11, pages 1756-1765, Bhuiyan et al. describe a specimen tension-corrosion test which is conducted in a chamber with a corrosive environment.

### Citation List

Patent Literature 1: JP-A-2007-298467

Non Patent Literature 1: "Stress corrosion cracking test for stainless steels (JIS G0576)" JIS hand book (steel I), 2008, 880-882
Non Patent Literature 2: "Standard test method for stress corrosion cracking: Standard of the 129th committee, Japan Society for the Promotion of Science" July 25, 1985

### Summary of Invention

### Technical Problem

The test method disclosed in Patent Literature 1 is advantageous in that a fatigue phenomenon occurring in a fatigue member can be reproduced. However, a range of stresses that can be generated in a portion exposed to a corrosive environment (that is, an internal cooling hole) is limited since the stress generated in the portion is obtained only from a heat stress caused by a temperature distribution between the surface of the internal cooling hole and a heating surface. Further, since it takes time to complete a heating and cooling cycle, it is difficult to conduct an acceleration test. In a case of a die, a number of cycles at which a crack is generated in the internal cooling hole when the die is actually used is 3rd power of 10 to 5th power of 10. The method according to Patent Literature 1 has a problem that the reproducing test can not be performed in a short period.

Furthermore, when the method according to Patent Literature 1 is carried out, a special testing machine on which a test piece is set up is required in addition to the test piece. The problems occur in quickly and easily evaluating a property resistant to stress corrosion cracking resulting from fatigue, and become an obstacle for early resolution of the material problem of a component associated with the property

In view of the above problems, it is an object of the present invention to provide a method for evaluating a corrosion fatigue damage, enabling to easily reproduce a corrosion fatigue damage occurring in a fatigue member such as an actual die by using a test piece and by solving the problems of the range of generated stresses (the reproducibility of actual use conditions), the test time and the testing machine.

### Solution to Problem

The present inventors keenly studied on a repetitive stress generated in a fatigue member in actual use, and found that the stress can be basically reproduced by "mechanically" applying a load on a surface of a test piece. The inventors performed a further study based on this finding, to achieve the present invention.

The present invention provides a method as defined in claim 1, which includes evaluating a corrosion fatigue damage, including repeatedly applying a load on a surface of a test piece having an internal space with a corrosive medium introduced therein, and observing a surface and/or a cross-section of the internal space in the load-applied test piece.

Preferably, the above method is applied to evaluation of a corrosion fatigue damage in the field of dies. That is, the method for evaluating a corrosion fatigue damage includes: providing a test piece wherein a space simulating an internal cooling hole of a die is formed in a material piece made of the same material as the die and a corrosive medium simulating a cooling medium of the die is introduced into the space; repeatedly applying a load on a surface of the test piece; and observing a surface and/or a cross-section of the space in the load-applied test piece.

### Advantageous effects of Invention

According to the present invention, the range of stresses generated in the test piece can be extended in an evaluation test of a corrosion fatigue damage. In other words, the reproducibility of actual use conditions can be improved. Also, the test time can be substantially reduced and restrictions on the testing machine can be removed. Accordingly, the present invention provides an indispensable technique for easily reproducing a corrosion fatigue damage generated in a fatigue member, preferably in an internal cooling hole of a die, by using a test piece.

### Brief Description of Drawings

[Fig. 1] Fig. 1 is a schematic view illustrating an example of a test piece used in the present invention.
[Fig. 2] Fig. 2 is a schematic view illustrating an example of a test method used according to the present invention.
[Fig. 3] Fig. 3 is a magnified photograph showing a stress corrosion crack generated on a surface of a space in the test piece, for explaining an example of observation according to the present invention.
[Fig. 4] Fig. 4 is a scanning electron micrograph showing a fracture surface of the stress corrosion crack in Fig. 3, for explaining an example of observation according to the present invention.

### Reference Signs List

1: Test piece
2: Material piece
3: Space
4: Airtight seal
5: Corrosive medium

### Description of Embodiments

As described above, an important aspect of the present invention lies in that a stress generated in an actual fatigue member can be reproduced by mechanically applying a load on a surface of a test piece, even though it is at the level of the test piece. In the present invention, the load has to be "applied repeatedly". The load can be repeatedly applied by an existing testing machine which can repeatedly apply any loads. The evaluating method can be thereby sped up and simplified. In the following, each feature of the evaluating method according to the present invention will be described.

### (1) A test piece has an internal space into which a corrosive medium has been introduced.

A corrosive environment required in the present invention is not such a conventional environment as "formed by setting a test piece in a corrosive atmosphere (that is, a corrosive environment is formed on a surface side of the test piece)". It is "formed by introducing a corrosive medium into a space formed inside the test piece (that is, a corrosive environment is formed inside the test piece)". Accordingly, a load can be repeatedly applied from the surface of the test piece by using an existing simple fatigue testing machine.

### (2) A load is repeatedly applied on the surface of the test piece.

In the case of the present invention, stress can be reproduced by mechanically applying a load even when a heat stress is generated in an actual fatigue member. Thus, it is not always necessary to apply a heat stress in the test piece. Thus, a special system such as a heating mechanism for generating a heat stress and a cooling mechanism associated therewith is not required in the fatigue testing machine. Accordingly, an existing fatigue testing machine can be used, and thereby controlled range of generated stresses can be extended, and a cycle time of the repetitive loads can be reduced, so that evaluation can be quickly and easily performed.

### (3) A surface and/or a cross-section of the internal space in the load-applied test piece are/is observed.

The evaluation of a corrosion fatigue damage according to the present invention means collection of one or more data regarding evaluation of a stress corrosion crack such as existence or development of the crack in the test piece, whether the test piece is broken, and the magnitude of the load or the number of load applications, in relation to the corrosive environment, in addition to general evaluation items. To evaluate, it is necessary to observe the surface and/or the cross-section (including a cracked surface and a fracture surface) of the internal space in the test piece.

The evaluating method according to the present invention exerts an excellent effect when applied to evaluation of a corrosion fatigue damage generated in an internal cooling hole of a die. That is, provided is a method for evaluating a corrosion fatigue damage generated in the internal cooling hole of the die by using a test piece. With respect to the material of the die, the internal cooling hole formed inside the die, a cooling medium introduced into the internal cooling hole, and a repetitive stress generated inside the die in use, the features are described as follows.

### (4) A test piece is provided by forming a space simulating an internal cooling hole of a die in a material piece made of a material of the die, and introducing a corrosive medium simulating the cooling medium of the die into the space.

It is a process of forming a test piece simulating an actual die having an internal cooling hole therein together with its corrosive environment. Thus, various tool steels defined in JIS (Japanese Industrial Standards) and improved steels thereof, as well as another material, may be of course used as a material of the test piece depending on an actual die. The corrosive medium may also follow the cooling medium used in the actual die. When testing conditions are to be controlled, the details such as its type or concentration may be changed. The corrosive medium is not limited to liquid, but may be vapor, mist or gas.

### (5) Repeated loads are applied on a surface of the test piece, and a surface and/or a cross-section of a space in the load-applied test piece are/is observed.

Since a load is applied on the surface of the test piece in the present invention, the load preferably corresponds to repetitive stress generated inside the die in use. The corresponding load means a surface load that can be generated in the space of the test piece simulating the die in actual use by a stress generated inside the die (that is, a portion including the internal cooling hole) in actual use. The setting value of the surface load not only directly reproduce the stress generated inside the actual die, but also it may be controlled to perform an accelerated test or the like.

Even when the evaluating method assumes the die, heat may not be generated in the test piece. In this case, "a cooling action itself" is not required for the corrosive medium introduced into the test piece, while it is required in the actual die. Thus, it is not necessary to circulate the cooling medium (or the corrosive medium) required in the actual die, and also in an evaluating method according to Patent Literature 1, so that the corrosive medium may be sealed in the test piece. Accordingly, the structures of the test piece and the testing machine can be more simplified, and the existing fatigue testing machine may be used.

### Examples

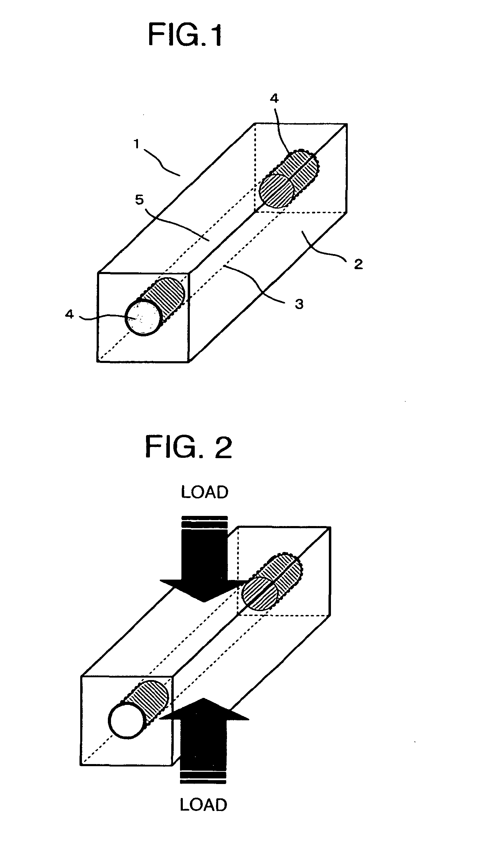

Fig. 1 is a schematic view illustrating an example of a test piece for the evaluating method according to the present invention. The test piece is used for reproducing and evaluating a corrosion fatigue damage that can generate in an internal cooling hole of an actual die-casting die. The test piece 1 has a corrosive medium 5 described below which is sealed in a space 3 of a material piece 2 by seals 4 at both ends. The material piece 2 has an outer size of 15 mm square × 60 mm length, and a through hole with a diameter of about 10 mm formed in the center of the 15 mm square in the longitudinal direction. The material of the material piece 2 is that obtained by quenching SKD61 from 1030°C and tempering the SKD61 to 45 HRC in a similar manner to the actual die-casting die assumed in the example. The space 3 of the material piece 2 corresponds to the internal cooling hole of the actual die-casting die, and 3.5% NaCl water solution was sealed therein as the corrosive medium 5 simulating a cooling medium.

A load was applied on opposing two surfaces of the test piece 1 at a cycle speed of 2Hz by using a hydraulic servo testing machine (not shown) according to the schematic view of Fig. 2. Whether or not a crack is generated was checked by removing the test piece 1 from the testing machine at regular intervals during the load test, and observing the surface of the space 3 with a microscope.

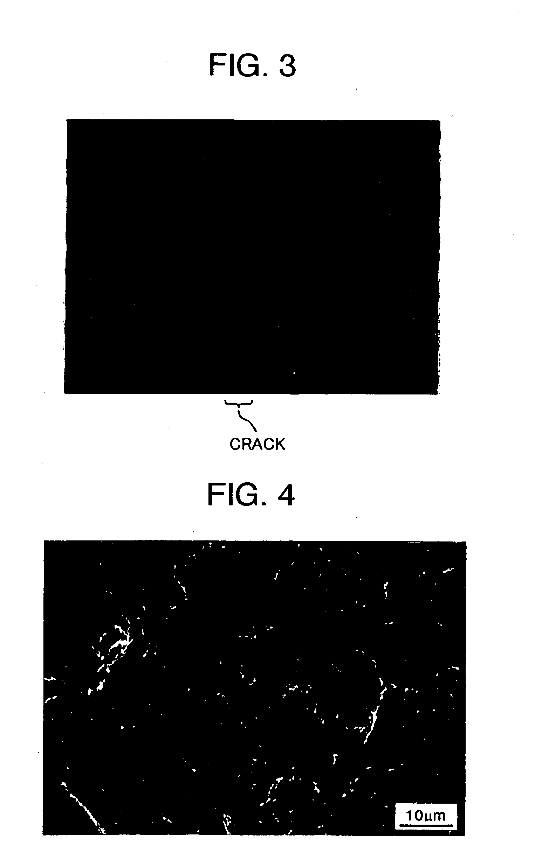

Fig. 3 is a magnified photograph of a space surface generating a crack thereon after a lapse of about 60,000 cycles (a total test time of about 8 hours) in the load test applying a tensile stress (a maximum main stress) of about 800 MPa on the surface of the space 3. Here, the stress on the space surface was obtained by stress analysis using finite element method with use of a computer. The result of observing a crack fracture surface is shown in a scanning electron micrograph in Fig. 4. Fig. 4 shows that the crack fracture surface exhibits intergranular fracture with corrosion, which is the same form of fatigue damage as that of the fracture surface of an internal cooling hole crack (a stress corrosion crack) in the actual die.

### Industrial Applicability

The evaluating method according to the present invention is not limited to the above example. Material or size of the test piece may be changed to any ones, and any corrosive medium, such as tap water, groundwater, or industrial water may be selected. The corrosive medium may be sealed as in the example. Alternatively, the corrosive medium may be circulated as cooling water, which continuously flows or intermittently flows and stops, by replacing the seals 4 in Fig. 1 with a predetermined joint (a connector) and connecting a water feed apparatus thereto.

To evaluate the crack generated in the test piece, the surface and/or the cross-section of the internal space are/is observed visually or with a microscope to measure the existence of the crack, or size or the like thereof. Also, the crack may be detected by ultrasonic flaw detection, transmission x-ray, magnetic flaw detection or the like, and one or more of the above means may be also used in combination. After the test, the portion where the crack is generated may be broken to directly measure the size thereof

## Claims

1. A method for evaluating a corrosion fatigue damage, comprising:
preparing a test piece (1) having an internal space (3) with a corrosive medium (5) introduced therein;
applying repeated loads on a surface of the test piece (1);
**characterised by** observing a surface and/or a cross-section of the internal space (3) of the load-applied test piece (1) to detect visually, with a microscope and/or by other means, such as ultrasonic flaw detection, transmission x-ray, and/or magnetic flaw detection, the existence of a crack generated in the test piece (1).

2. The method according to claim 1, wherein
the test piece (1) is made of a material of a die, and
the space (3) is simulating an internal cooling hole of the die and a corrosive medium (5) is simulating a cooling medium of the die.

## Patentansprüche

1. Verfahren zum Bewerten eines Korrosionsermüdungsschadens, in dem
ein Teststück (1) mit einem Innenraum (3) mit einem darin eingeführten Korrosionsmedium (5) präpariert wird,
wiederholt Belastungen auf eine Oberfläche des Teststücks (1) ausgeübt werden,
**dadurch gekennzeichnet, dass** eine Oberfläche und/oder ein Querschnitt des Innenraums (3) des belasteten Teststücks (1) beobachtet wird, um visuell mit einem Mikroskop und/oder einem anderen Mittel, wie zum Beispiel Ultraschall-Fehlererfassung, Röntgentransmission und/oder Magnet-Fehlererfassung, die Existenz eines in dem Teststück (1) erzeugten Risses erfasst wird.

2. Verfahren nach Anspruch 1, wobei
das Teststück (1) aus einem Material eines Formstücks hergestellt ist, und
der Raum (3) ein inneres Kühlloch des Formstücks simuliert und das Korrosionsmedium (5) ein Kühlmedium des Formstücks simuliert.

## Revendications

1. Procédé d'évaluation de dommages dus à la fatigue par corrosion, comprenant :
la préparation d'une éprouvette (1) ayant un espace interne (3) dans lequel est introduit un milieu corrosif (5) ;
l'application de charges répétées sur une surface de l'éprouvette (1) ;
**caractérisé par** l'observation d'une surface et/ou d'une section de l'espace interne (3) de l'éprouvette à charge appliquée (1) afin de détecter visuellement, à l'aide d'un microscope et/ou par d'autres moyens, tels qu'une détection ultrasonore de défauts, des rayons X de transmission et/ou une détection magnétique de défauts, l'existence d'une fissure générée dans l'éprouvette (1).

2. Procédé selon la revendication 1, dans lequel
l'éprouvette (1) est constituée d'un matériau d'une matrice, et
l'espace (3) simule un orifice de refroidissement interne de la matrice et le milieu corrosif (5) simule un milieu de refroidissement de la matrice.
